# FASCICULE DE BREVET EUROPEEN

(11) **EP 1 116 629 B1**
(45) Date de publication et mention de la délivrance du brevet: **29.09.2004**
(21) Numéro de dépôt: 01400075.6
(22) Date de dépôt: 12.01.2001
(51) Int. Cl.: B60R 13/04

(54) **Dispositif destiné à équiper une partie inférieure de la caisse d'un véhicule automobile**
Vorrichtung zur Ausstattung eines Unterteils von einer Kraftfahrzeugkarosserie
Device with which to equip a lower portion of the body of a motor vehicle

(30) Priorité: 14.01.2000 FR 0000438
(43) Date de publication de la demande: 18.07.2001
(73) Titulaire: Renault s.a.s., 92100 Boulogne Billancourt (FR)
(72) Inventeur: Pourrias, Jean-Yves, 92160 Antony (FR); Saillard, Patrick, 94100 Saint-Maur (FR); Tarenberque, Eric, 91570 Bièvres (FR)

(56) Documents cités:
- WO-A-97/26176
- DE-A- 19 528 309
- US-A- 3 718 357
- US-A- 4 666 196
- US-A- 5 139 285

## Description

L'invention se rapporte à un dispositif destiné à équiper une partie inférieure de la caisse d'un véhicule automobile, et plus particulièrement, un dispositif destiné à améliorer l'esthétique de ladite partie inférieure de caisse. Un dispositif selon le préambule de la revendication 1 est connu de US 3 718 357.

De manière générale, les parties latérales inférieures des caisses de véhicules automobiles, appelées bavolets, sont conçues de telle sorte qu'elles masquent le soubassement, lorsqu'on regarde le véhicule de profil.

Dans les cas où le plancher ne possède pas de tunnel afin d'y loger l'ensemble de la ligne d'échappement ainsi que la transmission du véhicule, l'ensemble de ces éléments, fixés sous un plancher plat, est plus visible puisque descendant plus près du sol. Il est alors nécessaire de rapporter sur les bavolets du véhicule un dispositif destiné à masquer les éléments précités.

Un tel dispositif, prolongeant les bavolets tout le long du véhicule, pose des problèmes de compatibilité avec des systèmes destinés à prendre appui en des points particuliers desdits bavolets, pour le soulèvement du véhicule.

En effet, on sait que lors de son montage, le véhicule est déplacé le long de la chaîne par l'intermédiaire de balancelles qui, passant sous la caisse du véhicule, suspendent ce dernier en prenant appui en partie sur les bavolets. Le même principe d'élévation du véhicule peut être utilisé lors d'interventions après-vente. Dans ces différents cas, le rajout de pièces sous les bavolets rend impossible l'utilisation de balancelles sans risque de plier lesdites pièces, non adaptées pour supporter le poids du véhicule.

L'invention a pour objet de remédier à ces inconvénients en proposant un dispositif selon la revendication 1.

Selon une caractéristique de l'invention, la seconde partie escamotable se trouve, en position rabattue, dans un plan sensiblement parallèle au plan de la partie inférieure de caisse du véhicule automobile.

Selon une autre caractéristique de l'invention, la seconde partie escamotable possède une zone de flexion lui permettant de se rabattre sur la première partie fixe.

Selon une autre caractéristique de l'invention, la seconde partie escamotable possède un moyen de retenue destiné à maintenir ladite seconde partie en position rabattue sur la première partie fixe.

Selon une autre caractéristique de l'invention, la première partie fixe possède deux branches destinées à se positionner de part et d'autre de la partie inférieure de caisse.

Selon une autre caractéristique de l'invention, la première partie fixe possède des découpes, correspondant à des points de levage, le long de la partie inférieure de la caisse du véhicule.

Selon une autre caractéristique de l'invention, la partie inférieure de caisse du véhicule automobile est un bavolet ou un élargisseur de bavolet. Selon une autre caractéristique de l'invention, le dispositif est réalisé par moulage d'une seule pièce avec l'élargisseur de bavolet.

D'autres avantages et caractéristiques de l'invention seront mis évidence dans la description suivante, donnée à titre d'exemple, en référence aux dessins annexés parmi lesquels:
- la figure 1 représente une vue en coupe d'un dispositif selon l'invention dans une position rabattue, équipant une partie latérale inférieure de véhicule automobile.
- la figure 2 représente une vue en coupe d'un dispositif selon l'invention dans une position escamotée.

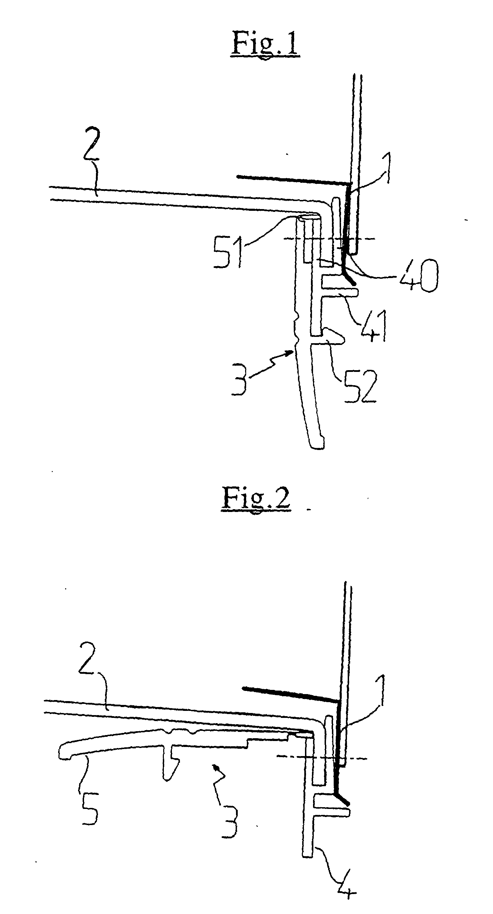

Sur la figure 1, un côté latéral inférieur de caisse appelé bavolet 1, s'étend longitudinalement selon l'axe du véhicule sensiblement entre les axes de roues avant et arrière de ce dernier. Avantageusement et de manière connue, le bavolet 1 est en tôle.

Dans l'exemple de réalisation représenté, le bavolet 1 est muni d'un élargisseur de bavolet 2, destiné non seulement à améliorer l'aspect esthétique du véhicule en harmonisant les largeurs de ce dernier, mais aussi à servir de marche pied.

Un dispositif 3, destiné à prolonger vers le bas le bavolet 1 et l'élargisseur 2, est fixé entre ledit élargisseur et ledit bavolet. Le dispositif 3 est avantageusement réalisé en matière plastique.

Le dispositif 3 comporte deux parties :
- une première partie fixe 4 assurant sa fixation à la caisse du véhicule.
- une seconde partie 5 escamotable masquant, en position rabattue, la ligne d'échappement du véhicule, non représentée.

La partie fixe 4 possède deux branches 40 ayant sensiblement la forme d'un U. Les branches 40 se positionnent de part et d'autre de l'élargisseur de bavolet 2, selon l'exemple de réalisation représenté. Une agrafe de fixation, non représentée, assure le maintien des deux branches 40, et donc la fixation de l'ensemble du dispositif 3 à la caisse du véhicule.

Dans une variante de réalisation, les branches 40 peuvent venir se fixer directement de part et d'autre du bavolet, lorsque le véhicule est par exemple dépourvu d'élargisseur de bavolet.

Une troisième branche 41, s'étendant perpendiculairement aux branches 40 assure le positionnement du dispositif 3 par rapport à l'extrémité inférieure du bavolet 1.

La partie escamotable 5 se présente sous la forme d'une bavette, articulée par rapport à la partie fixe 4 par l'intermédiaire d'une zone de flexion 51. Un ergot 52 s'étend perpendiculairement au plan de la partie escamotable 5, sensiblement à mi hauteur de cette dernière.

Comme représenté sur la figure 2, lorsque le dispositif 3, en position escamotée, est fixé sur l'élargisseur de bavolet 2 ou sur le bavolet 1 lui-même, le plan de la partie escamotable 5, écartée par rapport à la partie fixe 4, est sensiblement perpendiculaire au plan dudit bavolet.

Lorsque, comme représenté sur la figure 1, la seconde partie escamotable 5 est rabattue sur la première partie fixe 4, le plan de cette seconde partie est sensiblement parallèle au plan du bavolet 1. Dans cette configuration, l'ergot 52 s'amarre à la partie fixe 4 de telle sorte que le dispositif 3 reste en position rabattue, assurant le camouflage de la ligne d'échappement du véhicule.

Le dispositif 3 selon l'invention est donc compatible avec des systèmes de levage ou de halage du véhicule qui prennent appui sur les bavolets de ce dernier. En effet, en plus de l'articulation de la seconde partie escamotable 5, il est prévu des découpes dans la partie fixe 4 aux points préalablement définis pour dégager l'accès à la tôlerie où les systèmes précités viennent prendre appui.

De cette manière, lorsque le véhicule est, par exemple, sur la chaîne de montage en usine ou en intervention après-vente ou lorsque l'on utilise le cric, il suffit d'écarter la partie escamotable 5 du dispositif 3 puis de placer les balancelles ou le cric aux endroits de découpe de la partie fixe 4.

En usine, le dispositif 3 est, à son montage sur le bavolet 1 ou l'élargisseur 2 de bavolet, placé et retenu en position escamotée par l'intermédiaire d'une agrafe de maintien connue. Il suffit alors, en fin de montage du véhicule par exemple, d'abaisser la bavette de la partie escamotable 5 qui vient se clipser par l'ergot 52 sous la partie fixe 4.

Dans l'exemple de réalisation représenté, où le véhicule est muni d'élargisseur de bavolet 2, le dispositif 3 peut être réalisé d'une seule pièce, par moulage par exemple, avec ledit élargisseur.

En position rabattue, le dispositif 3 permet non seulement de camoufler la ligne d'échappement du véhicule mais aussi de préserver la partie inférieure du bavolet 1 des projections et donc de la corrosion.

Lorsque l'on souhaite intervenir en après-vente pour soulever le véhicule, il suffit de déclipser l'ergot 52 pour placer le dispositif 3 à nouveau en position escamotée (la seconde partie 5 écartée), le temps de l'intervention, et accéder aux points de levage à l'emplacement des découpes dans la partie fixe 4.

Le dispositif précédemment décrit ne sert pas seulement à équiper les parties inférieures latérales du véhicule, il peut également être installé en partie arrière, en prévoyant dans la partie fixe 4 des découpes correspondant aux différents éléments fonctionnels se trouvant dans cette zone.

Ce dispositif destiné à équiper une partie inférieure de la caisse d'un véhicule automobile est donc particulièrement simple de montage et d'utilisation et répond efficacement aux soucis d'esthétisme liés au véhicule, tout en améliorant la tenue à là corrosion de la caisse de ce dernier.

## Revendications

1. Dispositif destiné à équiper une partie inférieure de la caisse d'un véhicule automobile, comportant une première partie (4) rapportée fixement sur ladite partie inférieure de caisse (1,2) et une seconde partie escamotable mobile entre deux positions; **caractérisé en ce que** ces deux positions sont:
- une position rabattue dans laquelle la compatibilité de la partie inférieure de caisse avec un système de levage du véhicule est limitée et
- une position escamotée écartée dans laquelle le système de levage du véhicule peut prendre appui sur la partie inférieure de caisse.

2. Dispositif selon la revendication 1, **caractérisé en ce que** la seconde partie escamotable (5) se trouve, en position rabattue, dans un plan sensiblement parallèle au plan de la partie inférieure (1, 2) de caisse du véhicule automobile.

3. Dispositif selon l'une quelconque des revendications précédentes, **caractérisé en ce que** la seconde partie escamotable (5) possède une zone de flexion (51) lui permettant de se rabattre sur la première partie fixe (4).

4. Dispositif selon l'une quelconque des revendications précédentes, **caractérisé en ce que** la seconde partie escamotable (5) possède un moyen de retenue (52) destiné à maintenir ladite seconde partie (5) en position rabattue sur la première partie fixe (4).

5. Dispositif selon l'une quelconque des revendications précédentes, **caractérisé en ce que** la première partie fixe (4) possède deux branches (40) destinées à se positionner de part et d'autre de la partie inférieure (1, 2) de caisse.

6. Dispositif selon l'une quelconque de revendications précédentes, **caractérisé en ce que** la première partie fixe (4) possède des découpes, correspondant à des points de levage, le long de la partie inférieure (1, 2) de la caisse du véhicule.

7. Dispositif selon l'une quelconque des revendications précédentes, **caractérisé en ce que** la partie inférieure de caisse du véhicule automobile est un bavolet (1) ou un élargisseur de bavolet (2).

8. Dispositif selon la revendication 7, **caractérisé en ce qu'**il est réalisé par moulage d'une seule pièce avec l'élargisseur de bavolet (2).

## Patentansprüche

1. Vorrichtung, welche dafür bestimmt ist, einen unteren Teil der Karosserie eines Kraftfahrzeugs auszustatten, wobei sie einen ersten Teil (4) aufweist, welcher fest an dem unteren Teil der Karosserie (1, 2) befestigt ist, und einen zweiten Teil, welcher zwischen zwei Stellungen beweglich einziehbar ist, **dadurch gekennzeichnet, dass** die Stellungen sind:
- eine umgelegte Stellung, in welcher die Kompatibilität des unteren Teils der Karosserie mit einem Kraftfahrzeug-Hebesystem begrenzt ist; und
- eine beabstandete, eingezogene Stellung, in welcher das Hebesystem des Fahrzeugs sich an den unteren Teil der Karosserie anlegen kann.

2. Vorrichtung nach Anspruch 1, **dadurch gekennzeichnet, dass** der zweite, einziehbare Teil (5) sich in umgelegter Stellung in einer im Wesentlichen parallelen Ebene zur Ebene des unteren Teils (1, 2) der Karosserie des Kraftfahrzeugs befindet.

3. Vorrichtung nach irgendeinem der vorhergehenden Ansprüche, **dadurch gekennzeichnet, dass** der zweite, einziehbare Teil (5) eine Biegezone (51) aufweist, welche es ihm ermöglicht, sich auf den ersten, festen Teil (4) umzulegen.

4. Vorrichtung nach irgendeinem der vorhergehenden Ansprüche, **dadurch gekennzeichnet, dass** der zweite, einziehbare Teil (5) ein Rückhaltemittel (52) ausweist, welches dafür bestimmt ist, den zweiten Teil (5) in eingezogener Position auf den festen Teil (4) zurückzuhalten.

5. Vorrichtung nach irgendeinem der vorhergehenden Ansprüche, **dadurch gekennzeichnet, dass** der erste, feste Teil (4) zwei Äste (40) aufweist, welche dafür bestimmt sind, sich beiderseits des unteren Teils (1, 2) der Karosserie zu positionieren.

6. Vorrichtung nach irgendeinem der vorhergehenden Ansprüche, **dadurch gekennzeichnet, dass** der erste, feste Teil (4) Ausschnitte aufweist, welche Anhebepunkten entlang des unteren Teils (1, 2) der Fahrzeugkarosserie entsprechen.

7. Vorrichtung nach irgendeinem der vorhergehenden Ansprüche, **dadurch gekennzeichnet, dass** der untere Teil der Fahrzeugkarosserie eine Schutzschürze (1) oder ein Schutzschürzen-Erweiterer (2) ist.

8. Vorrichtung nach Anspruch 7, **dadurch gekennzeichnet, dass** sie durch Gießen in einstückiger Art und Weise mit dem Schutzschürzen-Erweiterer (2) realisiert ist.

## Claims

1. A device designed to equip a lower part of the bodywork of a motor vehicle, comprising a first part (4) assembled securely on said lower part of the bodywork (1, 2) and a second folding part that can be moved between two positions, **characterized in that** these two positions are:
- a folded down position in which the compatibility of the lower part of the bodywork with a lifting system of the vehicle is limited and
- a pushed away folded back position in which the lifting system of the vehicle can rest on the lower part of the bodywork.

2. Device according to claim 1, **characterized in that** the second folding part (5) is located, in folded down position, in a plane approximately parallel to the plane of the lower part (1,2) of the bodywork of the motor vehicle.

3. Device according to any one of the previous claims, **characterized in that** the second folding part (5) has a bending area (51) that allows it to fold down onto the first fixed part (4).

4. Device according to any one of the previous claims, **characterized in that** the second folding part (5) has a retainer (52) designed to hold said second part (5) in folded down position on the first fixed part (4).

5. Device according to any one of the previous claims, **characterized in that** the first fixed part (4) has two arms (40) designed to be positioned on either side of the lower part (1,2) ofthe bodywork.

6. Device according to any one of the previous claims, **characterized in that** the first fixed part (4) has cut-outs, corresponding to lifting points, along the lower part (1,2) of the bodywork of the vehicle.

7. Device according to any one of the previous claims, **characterized in that** the lower part of the bodywork of the vehicle is a sill section (1) or a sill section extender (2).

8. Device according to claim 7, **characterized in that** it is produced by moulding in one piece with the sill section extender (2).
